# EUROPÄISCHE PATENTSCHRIFT

(11) **EP 2 981 436 B1**
(45) Veröffentlichungstag und Bekanntmachung des Hinweises auf die Patenterteilung: **10.01.2018**
(21) Anmeldenummer: 14715847.1
(22) Anmeldetag: 04.04.2014
(51) Int. Cl.: B60Q 1/56

(54) **BELEUCHTUNGSEINRICHTUNG FÜR EIN HINTERES KENNZEICHENSCHILD EINES KRAFTFAHRZEUGS**
LIGHTING DEVICE FOR A REAR NUMBER PLATE OF A MOTOR VEHICLE
DISPOSITIF D'ÉCLAIRAGE D'UNE PLAQUE D'IMMATRICULATION ARRIÈRE D'UN VÉHICULE AUTOMOBILE

(30) Priorität: 05.04.2013 DE 102013005811
(43) Veröffentlichungstag der Anmeldung: 10.02.2016
(73) Patentinhaber: Audi AG, 85045 Ingolstadt (DE)
(72) Erfinder: PICKL, Richard, 85095 Denkendorf (DE)
(74) Vertreter: Thielmann, Frank
(86) Internationale Anmeldenummer: PCT/EP2014/000913
(87) Internationale Veröffentlichungsnummer: WO 2014/161675

(56) Entgegenhaltungen:
- EP-A2- 1 029 738
- EP-A2- 1 982 866
- WO-A1-2005/005195
- WO-A1-2014/056607
- DE-A1-102007 036 468
- US-A1- 2005 286 258

## Beschreibung

Die Erfindung betrifft eine Beleuchtungseinrichtung für ein hinteres Kennzeichenschild eines Kraftfahrzeugs nach dem Oberbegriff des Anspruchs 1. Eine allgemein bekannte Beleuchtungseinrichtung besteht aus einem hinteren, das Kennzeichenschild tragenden Karosseriewandbereich als Trägerwand und einem an die Trägerwand anschließenden Wandbereich als Überstand, der oberhalb des Kennzeichenschildes mit etwa horizontaler Fläche nach hinten absteht. An den Überstand schließt sich nach oben, in Fahrzeughochachsenrichtung hin ein Karosseriewandbereich als Oberwand an.

Im Überstand ist wenigstens ein Ausschnitt mit darüberliegender, einschaltbarer Lichtquelle vorgesehen, wobei der Ausschnitt von einer lichtdurchlässigen Lichtscheibe abgedeckt ist. Dabei überdeckt die Lichtscheibe mit einem umlaufenden Überdeckungsrand von unten her einen den Ausschnitt umgebenden Anlagerand und ist dort anliegend befestigt. Zur Befestigung der Lichtscheibe ist eine Clipbefestigung im Ausschnitt vorgesehen.

Der Überstand ist so ausgebildet, dass der Anlagerand des Ausschnitts lichtundurchlässig ist. Entsprechend wird der dort anliegende

Überdeckungsrand der Lichtscheibe von der eingeschalteten Lichtquelle nicht durchstrahlt und ist somit so dunkel, dass er zur Beleuchtung des Kennzeichenschilds praktisch nicht beiträgt.

Ähnlich ist die Situation, wenn der Ausschnitt durch ein nach unten offenes Leuchtengehäuse gebildet ist, welches von unten her durch eine Lichtscheibe entsprechend abgedeckt wird, wobei dann gegebenenfalls der Anlagerand vom Leuchtengehäuse gebildet wird. Auch dieser Fall soll unter dem verwendeten Begriff "Ausschnitt" fallen. Eine gattungsgemäße Beleuchtungseinrichtung für ein hinteres Kennzeichenschild eines Kraftfahrzeugs ist aus EP182866 und WO2005/005195 bekannt. Für eine solche Beleuchtungseinrichtung für das hintere Kennzeichenschilds eines Kraftfahrzeugs bestehen detaillierte rechtliche Vorgaben, insbesondere hinsichtlich des Lichteinfallwinkels und der Leuchtdichte, die von Fahrzeugherstellern einzuhalten sind (Amtsblatt der Europäischen Union L/35 vom 31.01.2009, Regel Nr. 4 der Wirtschaftskommission der Vereinten Nationen für Europa - einheitliche Bedingungen für die Genehmigung der Beleuchtungseinrichtungen für das hintere Kennzeichenschild von Kraftfahrzeugen und ihren Anhängern).

Insbesondere ist ein Lichteinfallswinkel von wenigstens 8° auf das Kennzeichenschild vorgeschrieben, der dazu führt, dass bei der vorstehenden, gattungsgemäßen Beleuchtungseinrichtung dieser Winkel nur eingehalten werden kann, wenn der Überstand relativ groß ist und das Kennzeichenschild etwa 7 cm vertieft im Heck eingebaut wird. Dabei wird der Winkel von 8° meist konstruktiv genau eingehalten, da ein größerer Winkel zu einer noch größeren Vertiefung führen würde.

Ein solcher relativ großer Überstand stört im Design und kann zudem als Schmutzfänger wirken und gegebenenfalls den c_{w}-Wert ungünstig beeinflussen.

Aufgabe der Erfindung ist es daher, eine gattungsgemäße Beleuchtungseinrichtung so weiterzubilden, dass bei Einhaltung der gesetzlichen Vorgaben für den Lichteinfallswinkel die Tiefe des Überstands reduzierbar ist.

Diese Aufgabe wird gelöst mit den Merkmalen des Patentanspruchs 1. Vorteilhafte Ausführungsformen sind Gegenstand der darauf rückbezogenen Unteransprüche.

Gemäß Anspruch 1 ist eine Beleuchtungseinrichtung für ein hinteres Kennzeichnenschild eines Kraftfahrzeugs vorgesehen, die eine das Kennzeichenschild tragende Trägerwand aufweist, an die sich ein, einen Überstand ausbildender Wandbereich anschließt, der in Fahrzeughochachsenrichtung oberhalb des Kennzeichenschildes mit etwa horizontaler Fläche nach hinten absteht. Ferner ist wenigstens ein überstandseitiger Ausschnitt mit darüberliegender, einschaltbarer Lichtquelle vorgesehen, wobei der Ausschnitt von einer lichtdurchlässigen Lichtscheibe dergestalt abgedeckt ist, dass die Lichtscheibe mit einem Überdeckungsrand von unten her einen den Ausschnitt umgebenden Anlagerand überdeckt bzw. dort anliegend befestigt ist. Ein von der Lichtquelle durch die Lichtscheibe abgestrahltes Licht wird mit hier mit vorbestimmter Leuchtdichte durch die Fläche innerhalb des Überdeckungsrands zum Kennzeichenschild abgestrahlt.

Erfindungsgemäß ist vorgesehen, dass die Lichtscheibe so ausgebildet ist und/oder wenigstens ein so angeordnetes und/oder ausgebildetes, lichtleitendes und/oder lichtlenkendes Element aufweist, dass auch Licht in zumindest einen Teilbereich eines zur Fahrzeuglängsrichtung gesehen hinteren Überdeckungsrandbereiches des Überdeckungsrandes der Lichtscheibe geleitet und von dort ebenfalls mit vorbestimmter Leuchtdichte zum Kennzeichenschild hin abgestrahlt wird. Zusätzlich zu diesem Vorsehen eines lichtleitenden und/oder lichtlenkenden Elementes weist die Lichtscheibe einen sich über wenigstens einen Teilbereich der Lichtscheibe erstreckenden Bereich (Trennbereich) definierter Breite auf, der eine gegenüber dem lichtdurchlässigen Bereich der Lichtscheibe definiert geringere Lichtdurchlässigkeit aufweist und mehrere, insbesondere zwei, vorzugsweise in Fahrzeugquerrichtung, nebeneinanderliegende Abstrahlbereiche der Lichtscheibe ausbildet bzw. definiert und wenigstens bereichsweise voneinander trennt.

Mit dieser erfindungsgemäßen Lösung kann zum einen erreicht werden, dass die in Fahrtrichtung hintere bzw. hinterste Kante des Überdeckungsrandbereichs der Lichtscheibe Licht abstrahlt und somit bei der Messung des erforderlichen Lichteinfallswinkels mit herangezogen werden kann, wodurch die Überstandstiefe vorteilhaft reduziert werden kann.

Mit dem erfindungsgemäßen Trennbereich kann zudem ein Aufbau zur Verfügung gestellt werden, bei dem an einer einzigen Lichtscheibe pro Abstrahlbereich jeweils wenigstens eine hintere bzw. hinterste Kante als Bestandteil des hinteren Überdeckungsrandbereiches Licht abstrahlen kann. Das heißt, dass an einer einzigen Lichtscheibe mehrere hintere bzw. hinterste Überdeckungsrandbereiche zur Messung des erforderlichen Lichteinfallwinkels herangezogen werden können, was ansonsten nur durch mehrere separate Lichtscheiben bzw. Beleuchtungseinrichtungen realisierbar ist und ersichtlich aufwendiger ist. Dies wirkt sich neben der vorteilhaften Reduzierung der Überstandstiefe des Weiteren besonders vorteilhaft auf die Ausleuchtung des Kennzeichenschilds insgesamt aus, weil dadurch eine erhöhte Variabilität im Hinblick auf die Gestaltung und Ausbildung der Beleuchtungsfelder am Kennzeichenschild erzielt wird.

Es wird hier somit mit einer einzigen Lichtscheibe, die vorzugsweise durch eine rahmenlose Lichtscheibe gebildet ist, ein Aufbau zur Verfügung gestellt, der demjenigen von zwei oder mehreren separaten Leuchten entspricht, wodurch sich die oben genannten Vorteile ergeben. Es ist vorgesehen, dass sich der definiert lichtundurchlässigere Bereich als Trennbereich vom hinteren Überdeckungsrandbereich der Lichtscheibe ausgehend im Wesentlichen geradlinig über wenigstens einen Teilbereich der Lichtscheibe erstreckt. Eine derartige Ausführung erlaubt eine fertigungstechnisch einfache Herstellung und zudem eine funktionssichere Abtrennung der beiden Abstrahlbereiche ohne wesentliche gegenseitige Beeinflussung.

Besonders bevorzugt ist eine Ausführungsform, bei der sich der definiert lichtundurchlässigere Bereich in der Art eines Trennstegs vom hinteren Überdeckungsrandbereich der Lichtscheibe ausgehend über die gesamte Breite der Lichtscheibe erstreckt, wodurch eine besonders vorteilhafte und funktionssichere Trennung zweier nebeneinanderliegender Abstrahlbereiche der Lichtscheibe erzielt wird. Mit der Breite der Lichtscheibe ist dabei im Wesentlichen die Erstreckungsrichtung der Lichtscheibe in Fahrzeuglängsrichtung gemeint, während die Länge im Wesentlichen die Erstreckung in Fahrzeugquerrichtung meint, und zwar unabhängig von den tatsächlichen Größenverhältnissen.

Gemäß einer weiteren besonders bevorzugten Ausführungsform erstreckt sich der definiert lichtundurchlässigere Bereich in etwa mittig zwischen zwei, vorzugsweise in Fahrzeugquerrichtung, nebeneinanderliegenden Abstrahlbereichen der Lichtscheibe. Mit einer derartigen mittigen Anordnung lässt sich ein vorteilhafter symmetrischer Aufbau realisieren, der zudem optisch ansprechend fertigungstechnisch einfach herstellbar ist.

Eine besonders effektive Beabstandung zweier nebeneinanderliegender Abstrahlbereiche der Lichtscheibe ergibt sich dann, wenn der definiert lichtundurchlässigere Bereich eine Breite von wenigstens 15 mm aufweist.

Die definiert geringere Lichtdurchlässigkeit des Trennbereichs gegenüber den lichtdurchlässigeren Abstrahlbereichen kann auf unterschiedliche Weise realisiert werden. So zum Beispiel dadurch, dass dieser Bereich im Wesentlichen bzw. völlig lichtundurchlässig ist. Grundsätzlich kann dieser Bereich aber auch in einer so definierten Weise lichtundurchlässig sein, dass eine für die Definition im Sinne der rechtlichen Vorgaben irrelevante Lichtdurchlässigkeit vorliegt.

Gemäß einer bevorzugten konkreten Lösung ist vorgesehen, dass wenigstens der hintere Überdeckungsrandbereich (bzw. dessen hintere Randkante) der Lichtscheibe (die vorzugsweise eine rechteckförmige, insbesondere rechteckige Lichtscheibe ist) im Wesentlichen geradlinig verläuft und/oder im Wesentlichen parallel zu einer in Fahrzeuglängsrichtung hinteren Übergangskante des Überstands verläuft.

Gemäß einer fertigungstechnisch besonders vorteilhaft zu realisierenden Ausführungsform ist bevorzugt vorgesehen, dass zumindest der hintere Überdeckungsrandbereich der Lichtscheibe, vorzugsweise die gesamte, insbesondere rechteckförmig ausgebildete, Lichtscheibe, im montierten Zustand unter einem definierten Winkel, insbesondere unter einem Winkel von 1° bis 10° bezogen auf die Mittellängsachse der Lichtscheibe, gegen die Fahrzeuglängsachse geneigt ist. Dadurch wird vorteilhaft und auf einfache Weise sichergestellt, dass jeder der Abstrahlbereiche jeweils einen in Fahrzeuglängsrichtung gesehen hintersten Bereich, also eine Art Vorsprung, aufweist, in den Licht einleitbar ist und von dem aus Licht mit vorbestimmter Leuchtdichte zum Kennzeichenschild abstrahlbar ist. Gemäß einer besonders vorteilhaften konkreten Ausgestaltung hierzu ist vorgesehen, dass die Lichtscheibe rechteckförmig, insbesondere rechteckig, ausgebildet ist und einen vom hinteren Überdeckungsrandbereich der Lichtscheibe ausgehenden und sich in etwa geradlinig über die Breite der Lichtscheibe erstreckenden, mittleren lichtundurchlässigeren Bereich aufweist, durch den zwei voneinander getrennte und in Fahrzeugquerrichtung nebeneinanderliegende rechteckförmige Abstrahlbereiche ausgebildet sind, wobei jeweils die in Fahrzeuglängsrichtung gesehen hinterste Ecke jedes der beiden rechteckförmigen Abstrahlbereiche eine Art Vorsprung ausbildet, in den Licht einleitbar ist und von dem aus Licht mit vorbestimmter Leuchtdichte zum Kennzeichenschild abstrahlbar ist. Ein derartiger Aufbau einer Lichtscheibe lässt sich fertigungstechnisch einfach herstellen, zudem einfach montieren und bewirkt einen üblichen optischen und vor allem hochwertigen optischen Gesamteindruck mit den zuvor genannten erfindungsgemäßen Vorteilen.

Gemäß einer zur "verdrehten" Anordnung mit einer vorzugsweise rechteckförmigen Lichtscheibe alternativen, ggf. aber auch zusätzlich hierzu vorzusehenden, Ausgestaltung ist vorgesehen, dass an jedem Abstrahlbereich der Lichtscheibe am hinteren Überdeckungsrandbereich wenigstens ein von diesem, bevorzugt nasen- und/oder fingerartig, in Fahrtrichtung nach hinten abragender Vorsprung als in Fahrzeuglängsrichtung gesehen hinterster Bereich der Lichtscheibe ausgebildet ist, in den Licht einleitbar ist und von dem aus Licht mit vorbestimmter Leuchtdichte zum Kennzeichenschild abstrahlbar ist. In diesem Zusammenhang ist bevorzugt weiter vorgesehen, dass sich der definiert lichtundurchlässigere Bereich in der Art eines Trennstegs über die gesamte Breite der Lichtscheibe und/oder sich mittig zwischen zwei den jeweiligen Vorsprüngen zugeordneten, nebeneinanderliegenden Abstrahlbereichen der Lichtscheibe erstreckt. Die Vorsprünge können dabei durch jedweden in Fahrzeuglängsrichtung gesehen hintersten Bereich gebildet sein, der ggf. auch nur um wenige Zehntel Millimeter nach hinten abragt, sofern dieser Vorsprung geeignet ist, als Bezugspunkt für die Bestimmung des Lichteinfallswinkels verwendet zu werden.

Mit einem derartigen Aufbau einer Lichtscheibe lässt sich vorteilhaft eine optisch ansprechende symmetrische Ausführung der Lichtscheibe erzielen, die sich ohne weiteres in das hochwertige Design moderner Fahrzeuge einfügt.

Eine derartige Vorsprunglösung lässt sich ebenfalls fertigungstechnisch einfach und mit relativ wenig Aufwand realisieren, zum Beispiel dergestalt, dass der hintere Überdeckungsrandbereich in definierten Bereichen in Fahrtrichtung gezielt nach hinten verlängert wird. Besonders vorteilhaft zur Vermeidung von Überständen ist es, dass eine anlagerandseitige, die Vorsprünge aufnehmende Aussparung vorgesehen wird. Mit einem derartigen Aufbau kann die Überstandstiefe insgesamt auf besonders einfache und/oder preisgünstige Weise reduziert werden.

Besonders bevorzugt ist hierbei ein Aufbau, bei dem die mehreren Vorsprünge an einer Lichtscheibe vorzugsweise im Wesentlichen gleich bzw. identisch ausgebildet sind, um einen insgesamt optisch ansprechenden Aufbau auszubilden und vor allem, um eine stets gleiche Bezugskante oder Referenzkante als hintere bzw. hinterste Kante zu haben, was vor allem bei rechteckförmigen Lichtscheiben vorteilhaft ist. Grundsätzlich bestünde aber auch die Möglichkeit, die Vorsprünge unterschiedlich zu gestalten.

Der definiert lichtundurchlässigere, insbesondere im Wesentlichen lichtundurchlässige, Bereich kann grundsätzlich durch jedes geeignete, auf die Lichtscheibe aufgebrachte und/oder in die Lichtscheibe eingebrachte Mittel gebildet sein, zum Beispiel durch eine aufklebbare und/oder aufspritzbare und/oder anspritzbare Schicht und/oder Folie und/oder durch eine Lackierung und/oder durch eine Komponente einer als Mehrkomponenten-Kunststoffscheibe ausgebildeten Lichtscheibe gebildet sein, um nur einige Beispiele zu nennen. Mittels derartiger Techniken lässt sich der lichtundurchlässigere Bereich auf einfache und funktionssichere Weise herstellen.

Das wenigstens eine lichtleitende und/oder lichtlenkende Element kann durch wenigstens eine, an wenigstens einer Oberfläche der Lichtscheibe angeformte und/oder angebrachte und/oder ins Material der Lichtscheibe integrierte Lichtstreustruktur, insbesondere durch wenigstens eine prismatische Struktur, gebildet sein, mit der Licht auf zuverlässige Weise seitlich in zumindest einen Teilbereich des hinteren Überdeckungsrandbereiches ablenkbar ist, von welchem ausgehend das Licht in Richtung zum Kennzeichenschild hin abgestrahlt wird.

Das wenigstens eine lichtleitende und/oder lichtlenkende Element kann zum einen so ausgebildet und/oder angeordnet werden, dass das Licht in den gesamten hinteren Überdeckungsrandbereich eingeleitet wird oder dass, alternativ dazu, das Licht nur in einen definierten Teilbereich des hinteren Überdeckungsrandbereiches eingeleitet wird, zum Beispiel insbesondere wenigstens in einen in Fahrzeuglängsrichtung gesehen hintersten Bereich jedes Abstrahlbereichs des hinteren Überdeckungsrandbereiches eingeleitet wird. Derartige Variationsmöglichkeiten erhöhen vorteilhaft die konstruktive Flexibilität bei der konkreten Planung und Ausgestaltung der erfindungsgemäßen Beleuchtungseinrichtung.

Um die Überstandstiefe so weit wie möglich zu reduzieren, ist gemäß einer besonders bevorzugten Ausführungsform vorgesehen, dass die in Fahrtrichtung hintere oder hinterste Kante des hinteren Überdeckungsrandbereiches unmittelbar an eine Übergangskante vom Überstand zu einem sich daran in Fahrzeughochachsenrichtung nach oben anschließenden Wandbereich (Oberwand) anschließt und/oder von dieser Übergangskante überdeckt ist. Das heißt mit anderen Worten, dass die hintere bzw. hinterste Kante so weit nach hinten gesetzt wird, dass diese nur noch minimalst von einer hinteren Kante des Überstands überdeckt und damit in Fahrtrichtung gesehen von hinten her, bei normaler stehender Betrachterposition, nicht sichtbar ist. Damit wird gleichzeitig auf einfache Weise sichergestellt, dass die Beleuchtungseinrichtung nicht in unerwünschter Weise nach hinten abstrahlt.

Für eine besonders vorteilhafte Lichtlenkung und Lichtabstrahlung ist weiter eine Ausführungsform vorteilhaft, bei der dem hinteren Überdeckungsrandbereich und/oder wenigstens dem in Fahrzeuglängsrichtung gesehen hintersten Bereich der jeweiligen Abstrahlbereiche wenigstens ein lichtleitendes und/oder lichtlenkendes Element zugeordnet ist, mittels dem das eingeleitete Licht zum Kennzeichenschild hin abgestrahlt wird. Dabei ist es besonders vorteilhaft, wenn das Licht als gerichtetes und/oder als diffuses Licht abgestrahlt wird.

Insbesonders ist ein solcher Aufbau der Beleuchungseinrichtung designtechnisch besonders vorteilhaft, bei dem der Winkel (Lichteinfallswinkel) zwischen einer Verbindungsgeraden von jedem in Fahrtrichtung hintersten Bereich eines Abstrahlbereiches des lichtabstrahlenden, hinteren Überdeckungsrandbereiches (vorzugsweise ein durch entsprechende geometrische Ausrichtung der Lichtscheibe bzw. des hinteren Überdeckungsrandbereiches erhaltener Bereich, zum Beispiel ein Eckbereich eines rechteckförmigen Abstrahlbereichs der Lichtscheibe, und/oder ein durch bauliche Maßnahmen erhaltener Bereich, zum Beispiel ein von dem hinteren Überdeckungsrandbereich wegragender Vorsprung) zur Unterkante des Kennzeichenschildes und einer Sichtfläche des Kennzeichenschildes wenigstens 8°, vorzugsweise genau 8°, beträgt. Damit ist es möglich, dass der Abstand zwischen einer, zwischen Trägerwand und Überstand ausgebildeten Ansatzkante und der Lichtscheibe sowie der Abstand zwischen der hinteren bzw. hintersten Kante der Lichtscheibe und der Übergangskante vom Überstand zu einer sich an den Überstand in Fahrzeughochachsenrichtung nach oben anschließenden Oberwand so gering als konstruktiv möglich ausgeführt ist, um die Überstandstiefe zu minimieren. Die Einbeziehung des erfindungsgemäßen lichtabstrahlenden hinteren Überdeckungsrandbereiches bzw. von dessen hintersten Bereichen in die Messung des 8°-Winkels und die Minimierung des oben genannten Abstandes ermöglichen somit eine vorteilhafte Reduzierung der Überstandstiefe, welche insbesondere bessere Designlösungen zulässt.

Konkret können der hintere Überdeckungsrandbereich oder wenigstens der in Fahrzeuglängsrichtung gesehen hinterste Bereich eines jeden Abstrahlbereichs des hinteren Überdeckungsrandbereiches und/oder die wenigstens eine lichtleitende und/oder lichtlenkende Struktur so ausgebildet sein, dass Licht von einer in Fahrtrichtung hinteren bzw. hintersten Kante des hinteren Überdeckungsrandbereiches nach unten zum Kennzeichenschild abgestrahlt wird, insbesondere der hintere bzw. hinterste Kante somit den Bezugspunkt für die Bestimmung des Lichteinfallwinkels bildet.

Besonders einfach, funktionssicher sowie technisch vorteilhaft ist eine Ausführungsform, bei der die dem hinteren Überdeckungsrandbereich und/oder die wenigstens dem in Fahrzeuglängsrichtung gesehen hintersten Bereich der jeweiligen Abstrahlbereiche zugeordnete lichtleitende und/oder lichtlenkende Struktur durch ein lichtreflektierendes Element gebildet ist, zum Beispiel durch eine Verspiegelung. Konkret kann hierzu vorgesehen sein, dass die zugeordnete lichtleitende und/oder lichtlenkende Struktur im Bereich zwischen dem hinteren Überdeckungsrandbereich und dem diesen zugeordneten Anlagerand angeordnet ist, insbesondere dort auf den hinteren Überdeckungsrandbereich aufgebracht ist.

Designtechnisch günstig ist ferner ein Aufbau, bei dem der Anlagerand des Ausschnitts, an dem der hintere Überdeckungsrandbereich anliegt dergestalt um die Lichtscheibendicke zurückversetzt ist, dass ein ebener, unterer Überstandswandbereich ausgebildet wird. Dies kann zum Beispiel im Bereich von etwaigen Vorsprüngen durch eine sickenartige Verprägung erreicht werden.

Zur Befestigung der Lichtscheibe können Halteelemente, insbesondere Clipse vorgesehen sein, insbesondere auch an der Lichtscheibe angeformt sein.

Als Lichtquelle stehen zum Beispiel Glühlampen oder LEDs zur Verfügung, die zum Beispiel an einer Platine der Beleuchtungseinrichtung gehaltert sind bzw. mit dieser gekoppelt sind.

Die Beleuchtungseinrichtung kann zum Beispiel einer Fahrzeugklappe, insbesondere einer Heckklappe oder einer Kofferraumklappe eines Fahrzeugs, oder Bestandteil eines Stoßfängers sein, je nach dem, wo das Kennzeichenschild angebracht und angeordnet ist.

Ferner kann bzw. können die die Beleuchtungseinrichtung und/oder das Kennzeichenschild tragenden Wandbereiche aus einem Kunststoff und/oder einem Blech hergestellt sein. Wenn der Überstand und die Oberwand sowie die Trägerwand beispielsweise aus geformten Blechen gebildet sind, ist fertigungstechnisch ein Abstand zwischen der hinteren Ausschnittkante und der Übergangskante als Niederhalteransatz für den Fügevorgang erforderlich. Insbesondere bei Kunststoffteilen kann dieser Abstand entfallen, wobei allerdings auch zu berücksichtigen ist, dass lichtabstrahlende Beleuchtungsteile so abzudecken sind, dass sie von der Fahrzeugrückseite her nicht unmittelbar zu sehen sind.

Die Lichtscheibe kann aus einem lichtdurchlässigen, insbesondere transparenten oder transluzenten Kunststoffmaterial hergestellt sein.

Weiter kann die Lichtscheibe als rahmenlose Lichtscheibe ausgebildet sein, die unter Zwischenschaltung einer randseitig umlaufenden Dichtung am Anlagerand anliegt. Es ist vorgesehen, dass die Lichtscheibe, die vorzugsweise eine Lichtscheibe mit einer rechteckförmigen bzw. rechteckigen Außenkontur ist, wenigstens einen sich über wenigstens einen Teilbereich der Lichtscheibe erstreckenden, gegenüber dem lichtdurchlässigen Bereich der Lichtscheibe eine definiert geringere Lichtdurchlässigkeit aufweisenden Bereich (Trennbereich) definierter Breite aufweist, der mehrere, insbesondere zwei, lichtdurchlässige Abstrahlbereiche der Lichtscheibe ausbildet bzw. definiert und/oder wenigstens bereichsweise voneinander trennt, vorzugsweise vollständig voneinander trennt.

Mit dieser erfindungsgemäßen Leuchtscheiben-Lösung können somit in eine einzige Lichtscheibe mehrere, z.B. zwei, separate Kennzeichenleuchten integriert werden. Die Trennung der einzelnen Abstrahlbereiche mittels des Trennbereichs erfolgt dabei bevorzugt so, dass die Abstrahlbereiche, vorzugsweise in Form vollständig voneinander getrennter Abstrahlbereiche, im montierten Zustand der Lichtscheibe im Wesentlichen in Fahrzeugquerrichtung nebeneinanderliegen.

Gemäß einer besonders bevorzugten erfindungsgemäßen Ausgestaltung ist vorgesehen, dass sich der definiert lichtundurchlässigere Bereich als Trennbereich von einem Randbereich der Lichtscheibe, insbesondere von einem im montierten Zustand der Leuchtscheibe in Fahrzeuglängsrichtung gesehen hinteren Überdeckungsrandbereich der Lichtscheibe, ausgehend im Wesentlichen geradlinig über wenigstens einen Teilbereich der Lichtscheibe erstreckt. Eine derartige Ausführung erlaubt insbesondere in Verbindung mit eine rechteckförmige Außenkontur aufweisenden Lichtscheiben, eine fertigungstechnisch einfache Herstellung und zudem eine funktionssichere Abtrennung der jeweiligen Abstrahlbereiche ohne wesentliche gegenseitige Beeinflussung.

Besonders bevorzugt ist eine Ausführungsform, bei der sich der definiert lichtundurchlässigere Bereich in der Art eines Trennstegs oder Trennstreifens von einem Randbereich der Lichtscheibe, insbesondere von einem im montierten Zustand hinteren Überdeckungsrandbereich der Lichtscheibe, ausgehend über die gesamte Breite der Lichtscheibe zum gegenüberliegenden Randbereich erstreckt, wodurch eine besonders vorteilhafte und funktionssichere Trennung zweier nebeneinanderliegender Abstrahlbereiche der Lichtscheibe erzielt wird. Mit der Breite der, vorzugsweise rechteckförmigen, Lichtscheibe ist dabei im Wesentlichen die Erstreckungsrichtung der montierten Lichtscheibe in Fahrzeuglängsrichtung gemeint, während die Länge im Wesentlichen die Erstreckung der montierten Lichtscheibe in Fahrzeugquerrichtung meint, und zwar unabhängig von den tatsächlichen Größenverhältnissen.

Gemäß einer weiteren besonders bevorzugten Ausführungsform erstreckt sich der definiert lichtundurchlässigere Bereich, bevorzugt bezogen auf eine Lichtscheibe mit einer rechteckförmigen bzw. rechteckigen Außenkontur, in etwa mittig zwischen zwei - vorzugsweise im' montierten Zustand der Lichtscheibe in Fahrzeugquerrichtung - nebeneinanderliegenden Abstrahlbereichen der Lichtscheibe. Mit einer derartigen mittigen Anordnung lässt sich ein vorteilhafter symmetrischer Aufbau realisieren, der zudem optisch ansprechend fertigungstechnisch einfach herstellbar ist.

Eine besonders effektive Beabstandung zweier nebeneinanderliegender Abstrahlbereiche der Lichtscheibe ergibt sich dann, wenn der definiert lichtundurchlässigere Bereich (Trennbereich) eine Breite von wenigstens 15 mm aufweist.

Die definiert geringere Lichtdurchlässigkeit des Trennbereichs gegenüber den lichtdurchlässigeren Abstrahlbereichen kann auf unterschiedliche Weise realisiert werden. So zum Beispiel dadurch, dass dieser Bereich im Wesentlichen bzw. völlig lichtundurchlässig ist. Grundsätzlich kann dieser Bereich aber auch in einer so definierten Weise lichtundurchlässig sein, dass eine für die Definition im Sinne der rechtlichen Vorgaben irrelevante Lichtdurchlässigkeit vorliegt.

Der definiert lichtundurchlässigere, insbesondere im Wesentlichen lichtundurchlässige, Bereich kann grundsätzlich durch jedes geeignete, auf die Lichtscheibe aufgebrachte und/oder in die Lichtscheibe eingebrachte Mittel gebildet sein, zum Beispiel durch eine aufklebbare und/oder aufspritzbare und/oder anspritzbare Schicht und/oder Folie und/oder durch eine Lackierung und/oder durch eine Komponente einer als Mehrkomponenten-Kunststoffscheibe ausgebildeten Lichtscheibe gebildet sein, um nur einige Beispiele zu nennen. Mittels derartiger Techniken lässt sich der lichtundurchlässigere Bereich auf einfache und funktionssichere Weise herstellen.

Die Lichtscheibe ist bevorzugt so ausgebildet und/oder weist wenigstens ein so angeordnetes und/oder ausgebildetes lichtleitendes und/oder lichtlenkendes Element auf, dass Licht auch in zumindest einen Teilbereich eines Randkantenbereichs der Lichtscheibe, geleitet und von dort mit vorbestimmter Leuchtdichte abgestrahlt wird.

Bezüglich weiterer Ausgestaltungsmöglichkeiten und Vorteile der erfindungsgemäßen Leuchtscheibe wird insbesondere auch auf die zuvor gemachten Ausführungen verwiesen, sofern diese die Leuchtscheibe betreffen.

Anhand einer Zeichnung werden Ausführungsformen der Erfindung näher erläutert.

Es zeigen:
- Fig. 1a: einen schematischen Querschnitt durch eine beispielhafte erste Ausführungsform einer erfindungsgemäßen Beleuchtungseinrichtung für das hintere Kennzeichenschild eines Kraftfahrzeugs entlang einer Schnittlinie A-A der Fig. 1b,
- Fig. 1b: eine Ansicht von unten auf die Beleuchtungseinrichtung nach Fig. 1a,
- Fig. 2: schematisch eine vergrößerte Darstellung einer Ansicht von unten auf eine Lichtscheibe der Beleuchtungseinrichtung gemäß Fig. 1b,
- Fig. 3a: schematisch einen Längsquerschnitt durch die Lichtscheibe mitsamt Platine und Lichtquellen,
- Fig. 3b: schematisch einen perspektivischen Querschnitt durch den Überstandsbereich einer zum Beispiel Heckklappe eines Kraftfahrzeugs,
- Fig. 4: schematisch eine Prinzipskizze einer erfindungsgemäßen Kennzeichenausleuchtung,
- Fig. 5a: schematisch einen Unteransicht auf eine Lichtscheibe gemäß einer zweiten Ausführungsform,
- Fig. 5b: schematisch eine Seitenansicht der Lichtscheibe gemäß Fig. 5a,
- Fig. 5c: schematisch eine Draufsicht auf die Lichtscheibe der Fig. 5a,
- Fig. 6: schematisch eine Ansicht von unten auf den Überstand, in dem zwei Lichtscheiben gemäß Fig. 5 gegen die Fahrzeuglängsachse geneigt montiert sind;
- Fig. 7: einen schematischen Querschnitt entlang der Linien C-C der Fig. 6,
- Fig. 8: schematisch eine Ansicht von unten auf eine Beleuchtungseinrichtung gemäß dem Stand der Technik, und
- Fig. 9: schematisch einen Querschnitt entlang der Linie B-B der den Stand der Technik darstellenden Fig. 8.

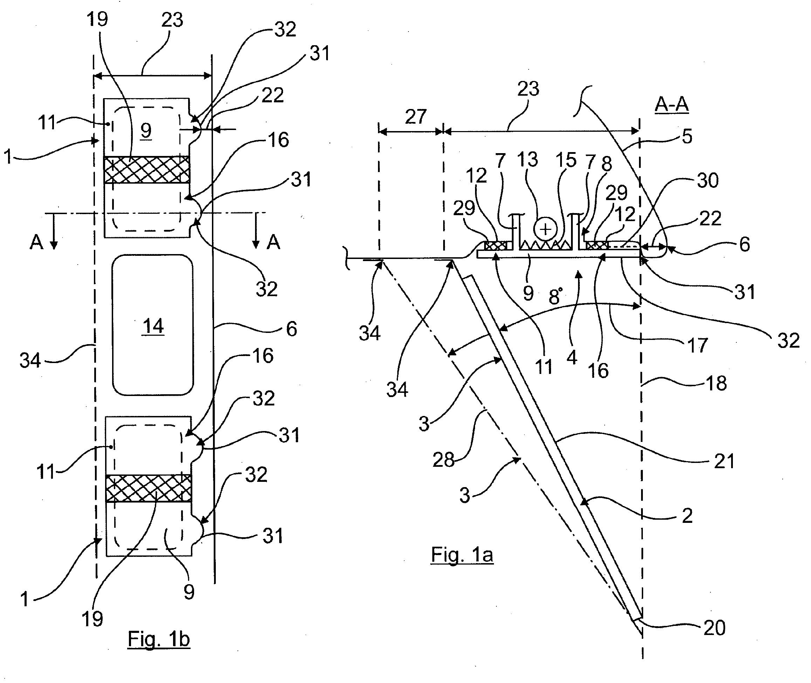

In Fig. 1 a ist ein schematischer vertikaler Querschnitt in Fahrzeuglängsrichtung einer beispielhaften Ausführungsform einer erfindungsgemäßen Beleuchtungseinrichtung 1 für das hintere Kennzeichenschild eines Kraftfahrzeugs dargestellt. Vom Kraftfahrzeug ist der das Kennzeichenschild 2 tragende Karosseriewandbereich als Trägerwand 3 und ein an die Trägerwand 3 anschließender Wandbereich als Überstand 4 gezeigt, an den sich ein nach oben gerichteter Karosseriewandbereich als Oberwand 5 anschließt. Der Überstand 4 steht oberhalb des Kennzeichenschildes 2 mit etwa horizontaler Fläche nach hinten ab und geht mit einer Übergangskante 6 in die Oberwand 5 über.

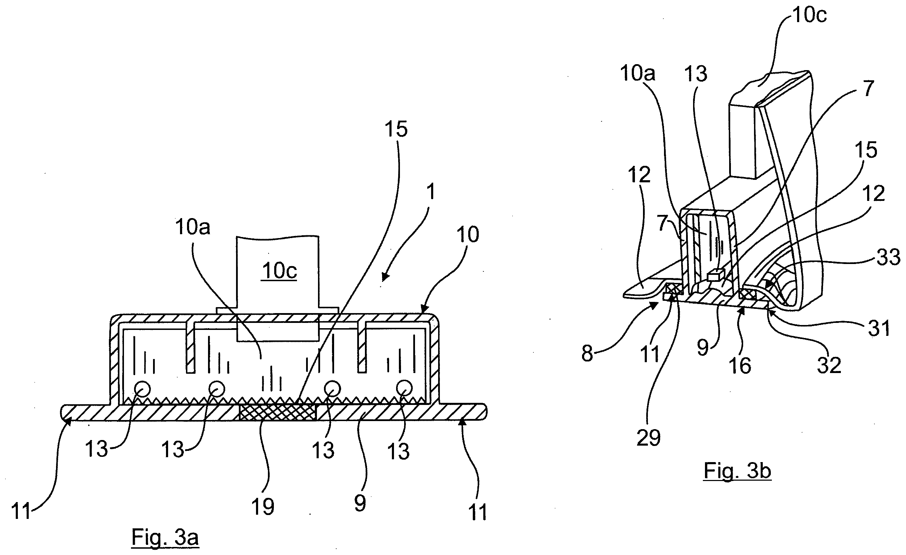

Aus der Fig. 1 a ist ersichtlich, dass im Wandbereich des Überstands 4 ein Ausschnitt 8 angebracht ist, in dem von unten her eine lichtdurchlässige Lichtscheibe 9 zum Beispiel eingeklipst ist und dort gehalten ist. Wie dies insbesondere auch aus der einen perspektivischen Querschnitt zeigenden Fig. 3b ersichtlich ist, handelt es sich bei der Lichtscheibe 9 hier beispielhaft um ein Bauteil, an dessen Oberseite Schenkel 7 eines Aufnahmegehäuses 10 angeformt sind, in dem eine Platine 10a aufgenommen ist, die (vergleiche Fig. 3a) zum einen mit einer Mehrzahl von Lichtquellen 13, die oberhalb der Lichtscheibe 9 angeordnet sind, gekoppelt ist und die zum anderen mit einer Leuchtenelektronik 10c verbunden ist, über die die Platine 10a und damit die Lichtquelle 13 mit Energie versorgt werden können.

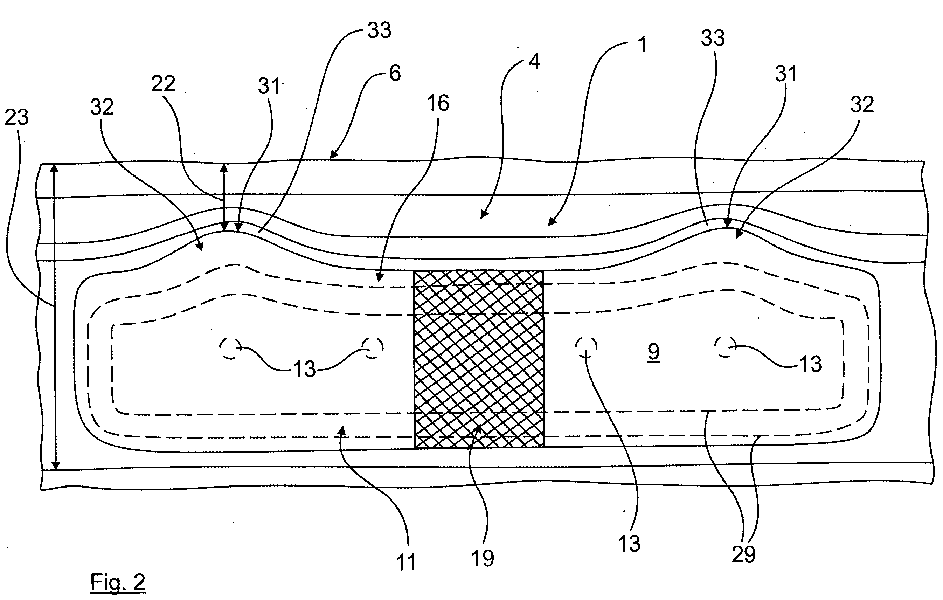

Im in der Fig. 1a und 3b gezeigten eingesetzten Zustand liegt die Lichtscheibe 9 von unten her mit einem umlaufenden Überdeckungsrand 11 an einem, den Ausschnitt umgebenden Anlagerand 12 an. Wie dies insbesondere der Fig. 2 zu entnehmen ist, liegen die Lichtscheiben 9 unter Zwischenschaltung einer randseitig umlaufenden Dichtung 29 am Anlagerand 12 an.

Die Lichtquellen 13 können zum Beispiel durch LED's gebildet sein.

Aus der Unteransicht auf die erfindungsgemäße Beleuchtungseinrichtung 1 (Fig. 1b) ist ersichtlich, dass zwei in Längsrichtung des Kennzeichenschilds 2 beabstandete, rechteckförmige Lichtscheiben 9 vorgesehen sind, zwischen denen hier lediglich beispielhaft ein schematisch angedeuteter Handgriff 14 für eine Heckklappenentriegelung angeordnet ist, was selbstverständlich nur dann der Fall sein kann, wenn die Beleuchtungseinrichtung 1 mitsamt Kennzeichenschild 2 an einer Heckklappe angeordnet ist. Es versteht sich, dass die Beleuchtungseinrichtung mitsamt Kennzeichenschild an jeder anderen geeigneten Stelle angeordnet sein kann, zum Beispiel auch im Stoßfängerbereich eines Fahrzeugs.

Erfindungsgemäß weisen die Lichtscheiben 9 lichtleitende und/oder lichtlenkende Elemente auf - hier zum Beispiel an der in Hochachsenrichtung oberen bzw. inneren Lichtscheibenoberfläche angeformte Prismenstrukturen 15 - die so ausgebildet und/oder angeordnet sind, dass von der Lichtquelle 3 durch die Lichtscheiben 9 abgestrahltes Licht sowohl durch die Fläche innerhalb des Überdeckungsrandes 11 zum Kennzeichenschild 2 mit vorbestimmter Leuchtdichte, vorzugsweise wenigstens 2,5 cd/m² abgestrahlt wird, als auch Licht in den Überdeckungsrand 11 oder zumindest in einen hinteren Überdeckungsrandbereich 16 der Lichtscheiben 9 geleitet und von dort ebenfalls mit der genannten Leuchtdichte zu Kennzeichenschild 2 hin abgestrahlt wird.

Wie dies insbesondere aus der Fig. 1b und der Fig. 2 ersichtlich ist, weist der hintere, hier im Wesentlichen geradlinig und in Fahrzeugquerrichtung verlaufende Überdeckungsrandbereich 16 des Überdeckungsrands 11 hier beispielhaft und bevorzugt zwei von diesen nasen- und/oder fingerartig in Fahrtrichtung nach hinten abragende Vorsprünge 32 auf. Die Vorsprünge 32 können grundsätzlich, wie dargestellt, im Wesentlichen gleich ausgebildet sein, gegebenenfalls aber auch unterschiedlich ausgebildet werden.

Wie dies insbesondere auch aus der Fig. 3b ersichtlich ist, ist im Bereich der Übergangskante 6 eine anlagerandseitige, die Vorsprünge 32 aufnehmende sickenartige Verprägung bzw. Ausnehmung 33 vorgesehen, in der die Vorsprünge 32 vorzugsweise konturangepasst aufgenommen sind.

Wie dies wiederum insbesondere den Fig. 1a, 2 und 3b entnommen werden kann, schließt somit die in Fahrtrichtung hintere Kante 31 der Vorsprünge 32 des hinteren Überdeckungsrandbereiches 16 jeweils unmittelbar an die Übergangskante 6, die zum Beispiel durch eine Umfalzung gebildet ist, an, so dass diese Übergangskante 6 die Vorsprünge 32 auch von hinten her überdeckt. Das heißt, dass die hinterste Kante 31 dieser Vorsprünge 32 hier bevorzugt so weit nach hinten gezogen ist, dass diese nur noch minimal von der Übergangskante 6 des Überstands 4 überdeckt und damit von hinten her, bei normaler stehender Betrachterposition, nicht sichtbar ist.

Der hintere Überdeckungsrandbereich 16 wird wenigstens im Bereich der Vorsprünge 32 mit einer zum Beispiel Verspiegelung als lichtleitendes und/oder lichtlenkendes Element 30 versehen, mittels dem das in den hinteren Überdeckungsrand und weiter in die Vorsprünge 32 eingeleitete Licht, wie dies nachfolgend noch näher beschrieben wird, noch besser gerichtet zum Kennzeichenschild 2 abgestrahlt werden kann.

Mit dem eben beschriebenen Aufbau kann somit das Licht wenigstens in den, den Vorsprüngen 32 zugeordneten Bereich des hinteren Überdeckungsrandbereich 16 sowie von dort aus in die Vorsprünge 32 eingeleitet werden, so dass dann diese Vorsprünge 32 bzw. deren in Fahrtrichtung hintersten Kante 31 den Bezugspunkt für die Bestimmung des Lichteinfallswinkels 17 bildet.

Wie in der Fig. 1 a schematisch dargestellt kann mit einer derartigen Ausführungsform die gesetzliche Vorgabe für einen Lichteinfallswinkel 17 von 8° eingehalten werden. Dieser Lichteinfallswinkel 17 wird gemäß Fig. 1 a zwischen einer Verbindungsgeraden 18 von einer hintersten Kante 19 des lichtabstrahlenden, jeweiligen Vorsprungs 32 zu einer Unterkante 20 des Kennzeichenschilds 2 und der Sichtfläche 21 des Kennzeichenschilds 2 gemessen.

Der Überstand 4 und die Oberwand 5 sowie die Trägerwand können aus einem beliebigen Material hergestellt sein, zum Beispiel aus einem Kunststoff- oder einem Blechmaterial. Fertigungstechnisch kann es gegebenenfalls erforderlich sein, dass, zum Beispiel in Verbindung mit Blechen, ein Abstand 22 (Fig. 1b) zwischen der hintersten Kante 31 eines Vorsprungs 32 bzw. der Vorsprünge 32 und der Übergangskante 6 vorzusehen ist, zum Beispiel als Niederhalteransatz für den Fügevorgang. Um den minimalen vorgeschriebenen Lichteinfallswinkel von 8° einhalten zu können, ist somit unter Einbeziehung des Abstands 22 wenigstens die schematisch eingezeichnete Überstandstiefe 23 erforderlich.

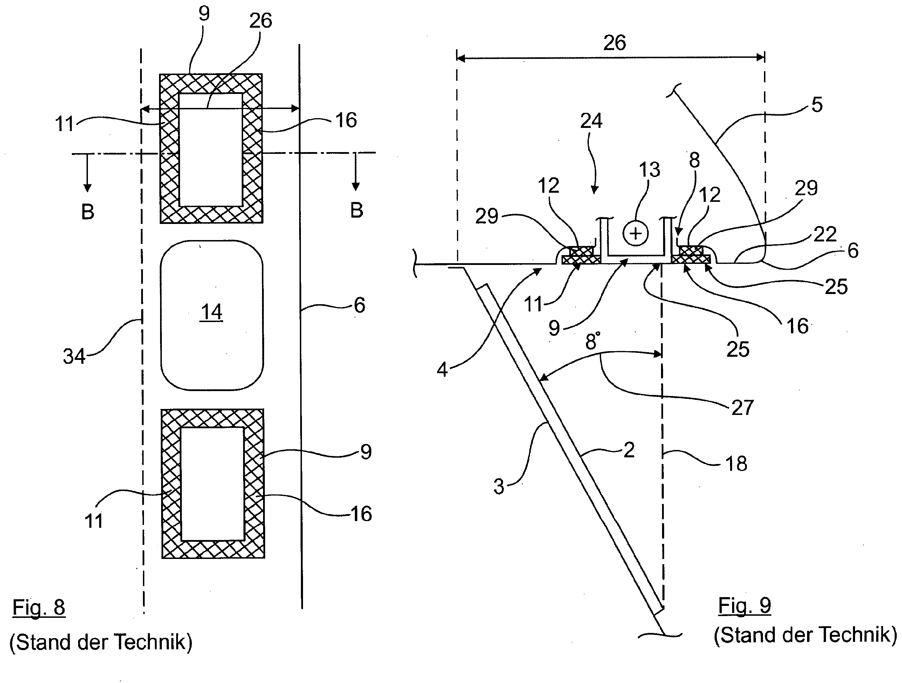

In den Fig. 8 und 9 ist eine ähnliche Beleuchtungseinrichtung 24 nach dem Stand der Technik zur Erläuterung der Unterschiede zu der erfindungsgemäßen Ausführungsform gezeigt, wobei gleiche Gegenstände mit gleichen Bezugszeichen versehen sind. Auch in den Fig. 8 und 9 ist die das Kennzeichenschild 2 tragende Trägerwand 3, der Überstand 4 und die Oberwand 5 sowie die Lichtquelle 13 und die Lichtscheibe 9 ersichtlich. Ebenso wie in den Fig. 1 und 2 liegt hier die Lichtscheibe 9 mit dem umlaufenden Überdeckungsrand 11 am zurückversetzten, lichtundurchlässigen Anlagerand 12 des Überstands 4 bzw. des Ausschnitts 8 an. Da hier keine lichtleitenden Elemente für eine seitliche Lichtablenkung, insbesondere keine Prismenstrukturen 15 vorgesehen sind, ist der umlaufende Überdeckungsrand 11 der Lichtscheibe 9, ebenso auch der hintere Überdeckungsrandbereich 16 unbeleuchtet dunkel, bzw. nicht mit der für die Kennzeichenbeleuchtung relevanten ausreichenden Leuchtdichte ausgeleuchtet, wie dies in der Fig. 9 schraffiert eingezeichnet ist. Damit kann die zur Bestimmung des minimalen Lichteinfallwinkels von 8° relevante Verbindungsgerade 18 erst an der vorderen, noch beleuchteten Kante 25 des hinteren Überdeckungsrandbereiches 16 ansetzen. Zur Einhaltung des Lichteinfallswinkels 17 von 8° ist damit die Trägerwand 3 entsprechend weit in Fahrzeuglängsrichtung nach vorne zu versetzen, wie dies zum Vergleich mit der strichlierten Linie 28 in Fig. 1 a eingezeichnet ist. Beim Stand der Technik nach den Fig. 8 und 9 kann somit der minimale Lichteinfallswinkel 27 nur mit einer vergleichsweise großen Überstandstiefe 26 eingehalten werden, die um den Überstandsbetrag 27 (Fig. 1a) größer als die Überstandstiefe 23 der erfindungsgemäßen Ausführungsform ist (gemessen bis zu einer Ansatzkante 34 der Trägerwand 3).
Wie dies insbesondere aus den Fig. 1b und 2 sowie der Fig. 3a ersichtlich ist, weist jede der in der Ausführungsform der Fig. 1 gezeigten beiden Lichtscheiben hier einen im Wesentlichen lichtundurchlässigen Trennsteg 19 auf, der sich mittig zwischen den beiden Vorsprüngen 32, in Fahrtrichtung gesehen über die gesamte Breite der Lichtscheibe 9 erstreckt und vorzugsweise eine Breite von wenigstens 15 mm aufweist.

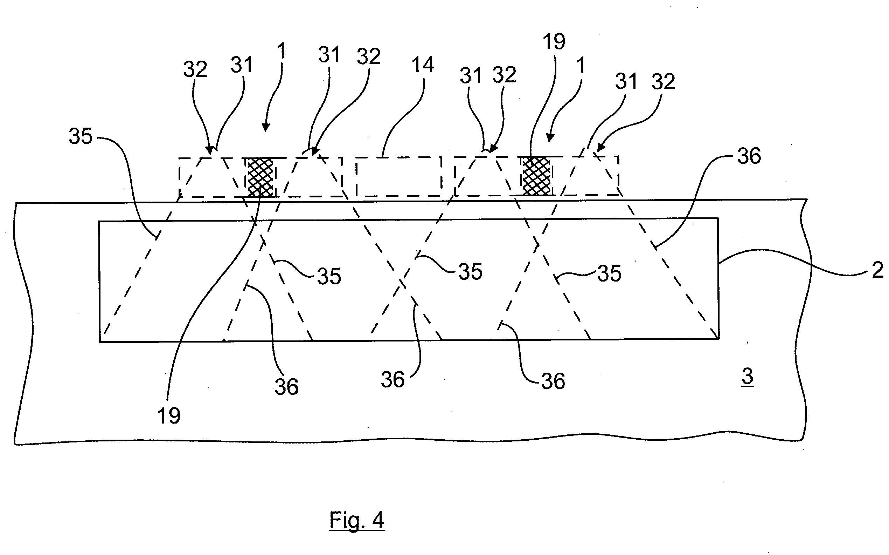

Dieser Trennsteg 19 kann zum Beispiel durch eine auf die Lichtscheibe 9 innen und/oder außen bzw. unten aufgespritzte Schicht oder Folie aus einem lichtundurchlässigen Material gebildet sein, so dass jede der beiden hier beispielhaft gezeigten Lichtscheiben 9 nebeneinander liegende und voneinander unabhängige Abstrahlbereiche 35, 36 aufweist, wie dies insbesondere auch in der Fig. 4 dargestellt ist.

Mit derartigen unabhängig voneinander zu betrachtenden zwei Abstrahlbereichen 35, 36 pro Lichtscheibe 9 dürfen beide Vorsprünge 32, obwohl sie an einer einzigen Lichtscheibe 9 ausgebildet sind, als Referenzkante für die Kennzeichenschild-Ausleuchtung verwendet werden, wie dies in der Fig. 4 lediglich äußerst schematisch dargestellt ist und ansonsten nur bei entsprechend beabstandeten separaten Beleuchtungseinrichtungen bzw. Lichtscheiben 9 der Fall wäre. Damit ergibt sich eine wesentliche konstruktive und bauliche Vereinfachung, die zudem, das heißt neben der Verringerung der Überstandstiefe gegenüber dem Stand der Technik auch eine verbesserte Kennzeichenschildausleuchtung gewährleistet.

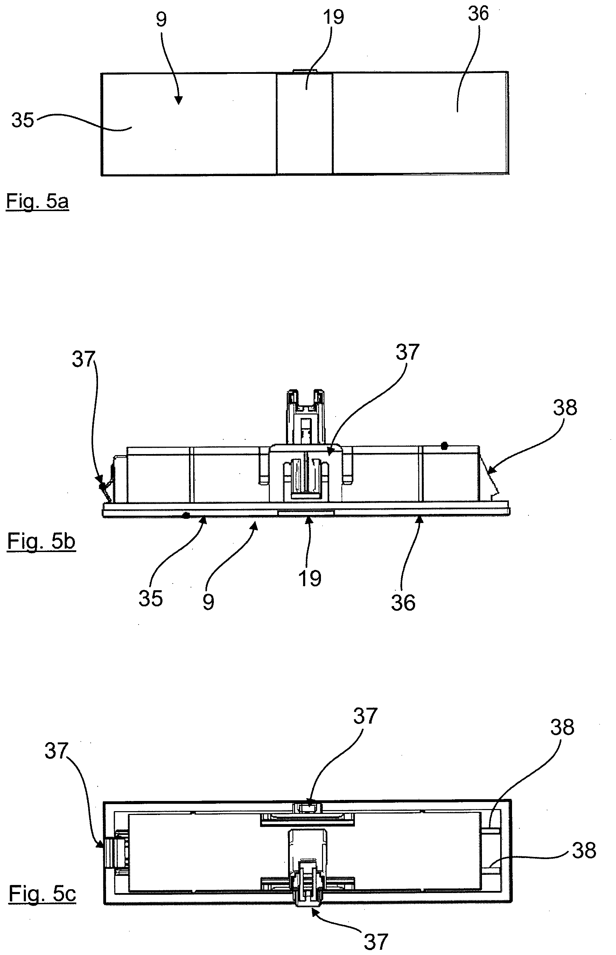

In den Figuren 5 bis 7 ist nunmehr eine zweite alternative sowie beispielhafte Ausführungsform einer erfindungsgemäßen Beleuchtungseinrichtung für das hintere Kennzeichenschild eines Kraftfahrzeugs gezeigt.

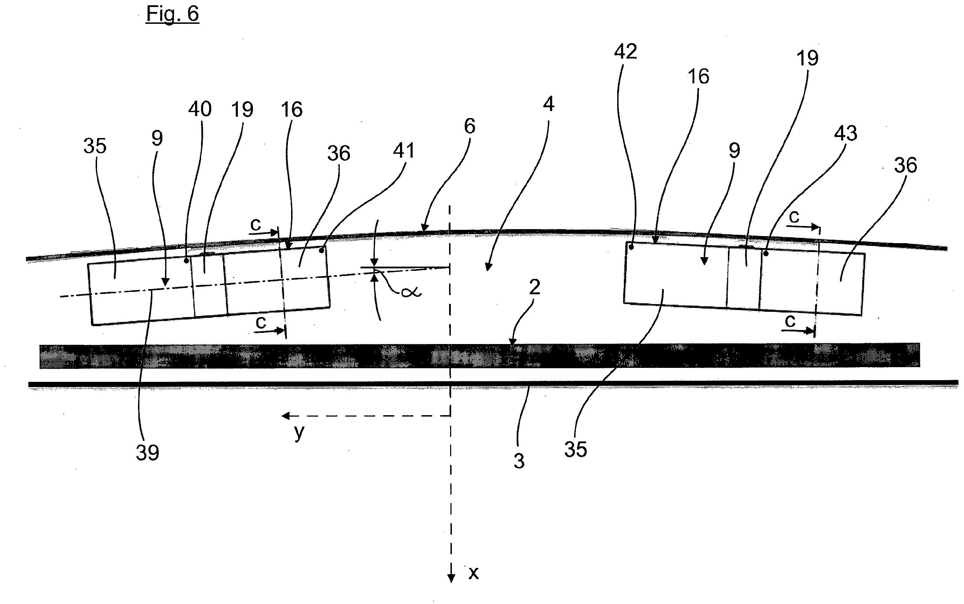

Die unterschiedliche Ansichten zeigenden Figuren 5a bis 5c machen deutlich, dass es sich bei der Lichtscheibe 9 um eine bezüglich der Außenabmessungen im Wesentlichen, rechteckförmige bzw. rechteckige Lichtscheibe 9 handelt, die, was insbesondere aus der eine Unteransicht zeigenden Figur 5a ersichtlich ist, zwei voneinander getrennte und im montierten Zustand (siehe Figur 6) in Fahrzeugquerrichtung nebeneinander liegende, im Wesentlichen ebenfalls rechteckförmige bzw. rechteckige Abstrahlbereiche 35 bzw. 36 aufweist. Die beiden rechteckigen Abstrahlbereiche 35, 36 weisen hier beispielhaft eine im Wesentlichen gleiche Größe bzw. im Wesentlichen gleiche Abmessungen auf und sind durch einen mittleren, lichtundurchlässigen Trennsteg 19 voneinander getrennt, der sich über die gesamte Breite der Lichtscheibe 9 erstreckt und vorzugsweise eine Breite von wenigstens 15 Millimetern aufweist.

Auch hier kann dieser, vorzugsweise geschwärzt bzw. schwarz ausgebildete, Trennsteg wieder analog zu den vorstehenden Ausführungen zum Beispiel durch eine auf der Lichtscheibe 9 innen und/oder außen bzw. unten aufgespritzte Schicht oder Folie aus einem lichtundurchlässigen Material gebildet sein.

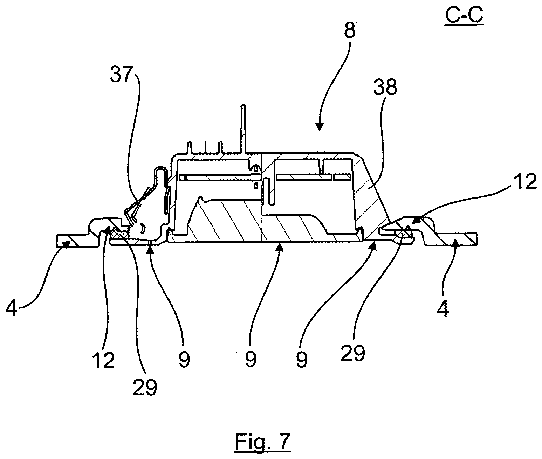

Die Fig. 5b zeigt eine Seitenansicht, aus der sehr gut der oberhalb der Lichtscheibe 9 liegende Aufbau mitsamt Haltefedern 37 und Rastnasen 38 (vergleiche auch Fig. 5c, die eine Draufsicht auf die Lichtscheibe zeigt) ersichtlich ist, mittels denen die Lichtscheibe 9 in der in der Fig. 7 gezeigten Weise am Anlagerand 12 unter Zwischenschaltung eines Dichtelementes 29 festlegbar, insbesondere verklipsbar ist. Wie dies insbesondere aus der Fig. 7 ersichtlich ist, ist der einen Ausschnitt 8 umgebende Anlagerand 12 gegenüber dem sich daran anschließenden Wandbereich des Überstands 4 soweit zurückgesetzt, dass die Lichtscheibe 9 mit ihrer Außenseite im in der Fig. 7 gezeigten montierten Zustand im Wesentlichen oberflächenbündig an den umgebenden Wandbereich des Überstandes 4 anschließt.

Ansonsten entspricht der Aufbau der Beleuchtungseinrichtung oberhalb der Lichtscheibe 2 zum Beispiel demjenigen, wie er zuvor in Verbindung mit der ersten Ausführungsform näher erläutert worden ist.

Wie dies nun insbesondere aus der Fig. 6 ersichtlich ist, die eine Ansicht von unten auf den Überstand 4 zeigt, in dem zwei rechteckige Lichtscheiben 9 entsprechend der Ausgestaltung gemäß der Figuren 5a bis 5c montiert sind, ist hier jede der Lichtscheiben 9 unter einem definierten Winkel α (siehe linke Lichtscheibe 9) bezogen auf die Mittellängsachse 39 der Lichtscheibe 9 gegen die Fahrzeuglängsachse x geneigt, sodass jeweils die in Fahrzeuglängsrichtung x gesehen hinterste Ecke 40, 41 jedes der beiden rechteckförmigen Abstrahlbereiche 35, 36 einen, in Fahrzeuglängsrichtung x gesehen hintersten Bereich ausbildet, in den Licht einleitbar ist und von dem aus Licht mit vorbestimmter Leuchtdichte zum Kennzeichenschild 2 hin abgestrahlt werden kann. Die hintersten Ecken 40, 41 sind hier jeweils mit einem schwarzen Punkt gekennzeichnet.

Diese hintersten Ecken 40, 41 jedes der beiden rechteckförmigen Abstrahlbereiche 35, 36 dienen somit, wie vorstehend in Verbindung mit der ersten Ausführungsform in analoger Weise beschrieben, als Bezugspunkt für die Bestimmung des Lichteinfallswinkels 17, der hier dann analog zu der ersten Ausführungsform zwischen einer Verbindungsgeraden von den hintersten Ecken 40, 41 der Abstrahlbereiche 35, 36 zu einer Unterkante 20 des Kennzeichenschilds 2 und der Sichtfläche 21 des Kennzeichenschilds 2 gemessen wird, wie dies beispielhaft in der Fig. 1 a für die erste Ausführungsform dargestellt ist.

Das eben zur in der Bildebene der Fig. 6 linken Lichtscheibe 9 Gesagte gilt in analoger Weise für die in der Bildebene der Fig. 6 beabstandet zur linken Lichtscheibe 9 angeordnete bzw. montierte rechte Lichtscheibe 9. Hier bilden dann in anlaoger Weise die in Fahrzeuglängsrichtung x hintersten Ecken 42, 43 der Abstrahlbereiche 35, 36 die in Fahrzeuglängsrichtung x gesehen hintersten Bereiche der Leuchtscheibe aus, in die Licht einleitbar ist und die somit als Bezugspunkte für die Bestimmung des Lichteinfallswinkels 17 dienen.

Wie aus der beispielhaften Ausführungsform und Darstellung der Fig. 6 sehr gut ersichtlich ist, sind die hintersten Ecken 40, 41, 42, 43 hier jeweils Bestandteil des hinteren Überdeckungsrandbereichs 16 der Lichtscheibe 9.

Dieser hintere Überdeckungsrandbereich 16 ist hier aufgrund der Rechteckform der Lichtscheibe geradlinig verlaufend ausgebildet und, wie dies weiter aus der Fig. 6 sehr gut ersichtlich ist, so angeordnet, dass dieser im Wesentlichen parallel zu einer in Fahrzeuglängsrichtung hinteren Übergangskante 6 des Überstands 4 verläuft, wobei die hintere Übergangskante 6 des Überstands 4 zum Beispiel eine Heckklappenhinterkante sein kann.

Ansonsten entspricht der Aufbau und die Funktionsweise identisch derjenigen der ersten Ausführungsform, sodass zur Vermeidung von Wiederholungen auf die dort gemachten Ausführungen verwiesen wird.

## Patentansprüche

1. Beleuchtungseinrichtung für ein hinteres Kennzeichenschild eines Kraftfahrzeugs, mit einer das Kennzeichenschild (2) tragenden Trägerwand (3), an die sich ein, einen Überstand (4) ausbildender Wandbereich anschließt, der in Fahrzeughochachsenrichtung oberhalb des Kennzeichenschildes (2) mit etwa horizontaler Fläche nach hinten absteht, sowie mit wenigstens einem überstandseitigen Ausschnitt (8) mit darüber liegender Lichtquelle (13), wobei der Ausschnitt (8) von einer lichtdurchlässigen Lichtscheibe (9) dergestalt abgedeckt ist, dass die Lichtscheibe (9) mit einem Überdeckungsrand (11) von unten her einen den Ausschnitt (8) umgebenden Anlagerand (12) überdeckt, wobei ein von der Lichtquelle (13) durch die Lichtscheibe (9) abgestrahltes Licht mit vorbestimmter Leuchtdichte durch die Fläche innerhalb des Überdeckungsrands (11) zum Kennzeichenschild (2) abgestrahlt wird, wobei die Lichtscheibe (9) wenigstens einen sich über wenigstens einen Teilbereich der Lichtscheibe (9) erstreckenden Bereich (19) definierter Breite aufweist, der eine gegenüber dem lichtdurchlässigen Bereich der Lichtscheibe (9) definiert geringere Lichtdurchlässigkeit aufweist und mehrere Abstrahlbereiche (35, 36) der Lichtscheibe (9) ausbildet und/oder wenigstens bereichsweise voneinander trennt, **dadurch gekennzeichnet, dass** sich der definiert lichtundurchlässigere Bereich (19) als Trennbereich vom in Fahrzeuglängsrichtung (x) hinteren Überdeckungsrandbereich (16) der Lichtscheibe (9) ausgehend über wenigstens einen Teilbereich der Lichtscheibe (9) erstreckt und sich mittig zwischen zwei in Fahrzeugquerrichtung nebeneinanderliegenden Abstrahlbereichen (35, 36) der Lichtscheibe (9) erstreckt, und dass die Lichtscheibe (9) wenigstens ein lichtleitendes und/oder lichtlenkendes Element (15, 30) aufweist, das Licht auch in zumindest einen Teilbereich eines in Fahrzeuglängsrichtung hinteren Überdeckungsrandbereiches (16) des Überdeckungsrandes (11) leitet und von dort mit vorbestimmter Leuchtdichte zum Kennzeichenschild (2) hin abstrahlt.

2. Beleuchtungseinrichtung nach Anspruch 1, **dadurch gekennzeichnet, dass** sich der definiert lichtundurchlässigere Bereich (19) als Trennbereich vom hinteren Überdeckungsrandbereich (16) der Lichtscheibe (9) ausgehend im Wesentlichen geradlinig in der Art eines Trennstegs über die gesamte Breite der Lichtscheibe (9) erstreckt.

3. Beleuchtungseinrichtung nach einem der vorhergehenden Ansprüche, **dadurch gekennzeichnet, dass** der definiert lichtundurchlässigere Bereich (19) eine Breite von wenigstens 15 mm aufweist und/oder dass der definiert lichtundurchlässigere Bereich ein im Wesentlichen lichtundurchlässiger oder in definierter Weise lichtundurchlässiger Trennbereich ist.

4. Beleuchtungseinrichtung nach einem der vorhergehenden Ansprüche, **dadurch gekennzeichnet, dass** wenigstens der hintere Überdeckungsrandbereich (16) der, vorzugsweise rechteckförmig ausgebildeten, Lichtscheibe (9) im Wesentlichen geradlinig verläuft und/oder im Wesentlichen parallel zu einer in Fahrzeuglängsrichtung hinteren Übergangskante (6) des Überstands (4) verläuft.

5. Beleuchtungseinrichtung nach einem der vorhergehenden Ansprüche, **dadurch gekennzeichnet, dass** zumindest der hintere Überdeckungsrandbereich (16) der Lichtscheibe (9), vorzugsweise die gesamte, insbesondere rechteckförmig ausgebildete, Lichtscheibe (9), im montierten Zustand unter einem definierten Winkel, insbesondere unter einem Winkel von 1° bis 10° bezogen auf die Mittellängsachse (39) der Lichtscheibe (9), gegen die Fahrzeuglängsachse (x) geneigt ist und somit jeder der Abstrahlbereiche (35, 36) jeweils einen in Fahrzeuglängsrichtung (x) gesehen hintersten Bereich (40, 41, 42, 43) aufweist, in den Licht einleitbar ist und von dem aus Licht mit vorbestimmter Leuchtdichte zum Kennzeichenschild (2) abstrahlbar ist.

6. Beleuchtungseinrichtung nach Anspruch 5, **dadurch gekennzeichnet, dass** die Lichtscheibe (9) rechteckförmig ausgebildet ist und einen vom hinteren Überdeckungsrandbereich (16) der Lichtscheibe (9) ausgehenden und sich in etwa geradlinig über die Breite der Lichtscheibe (9) erstreckenden, mittleren lichtundurchlässigeren Bereich (19) aufweist, durch den zwei voneinander getrennte und in Fahrzeugquerrichtung nebeneinanderliegende rechteckförmige Abstrahlbereiche (35, 36) ausgebildet sind, wobei jeweils die in Fahrzeuglängsrichtung (x) gesehen hinterste Ecke jedes der beiden rechteckförmigen Abstrahlbereiche einen in Fahrzeuglängsrichtung (x) hintersten Bereich (40, 41, 42, 43) bzw. Vorsprung ausbildet, in den Licht einleitbar ist und von dem aus Licht mit vorbestimmter Leuchtdichte zum Kennzeichenschild (2) abstrahlbar ist.

7. Beleuchtungseinrichtung nach einem der vorhergehenden Ansprüche, **dadurch gekennzeichnet, dass** an jedem Abstrahlbereich (35, 36) der Lichtscheibe (9) am hinteren Überdeckungsrandbereich (16) wenigstens ein von diesem, bevorzugt nasen- und/oder fingerartig, in Fahrtrichtung nach hinten abragender Vorsprung (32) ausgebildet ist, in den Licht einleitbar ist und von dem aus Licht mit vorbestimmter Leuchtdichte zum Kennzeichenschild (2) abstrahlbar ist, wobei bevorzugt vorgesehen ist, dass sich der definiert lichtundurchlässigere Bereich (19) in der Art eines Trennstegs über die gesamte Breite der Lichtscheibe (9) und/oder sich mittig zwischen zwei den jeweiligen Vorsprüngen (32) zugeordneten, nebeneinanderliegenden Abstrahlbereichen (35, 36) der Lichtscheibe (9) erstreckt.

8. Beleuchtungseinrichtung nach einem der vorhergehenden Ansprüche, **dadurch gekennzeichnet, dass** der definiert lichtundurchlässigere Bereich (19) durch ein auf die Lichtscheibe (9) aufgebrachtes und/oder in die Lichtscheibe (9) eingebrachtes Mittel gebildet ist, insbesondere durch eine aufklebbare und/oder aufspritzbare und/oder anspritzbare Schicht und/oder Folie und/oder durch eine Lackierung und/oder durch eine Komponente einer als Mehrkomponenten-Kunststoffscheibe ausgebildeten Lichtscheibe (9) gebildet ist.

9. Beleuchtungseinrichtung nach einem der vorhergehenden Ansprüche, **dadurch gekennzeichnet, dass** das wenigstens eine lichtleitende und/oder lichtlenkende Element (15) durch wenigstens eine, an wenigstens einer Oberfläche der Lichtscheibe (9) angeformte und/oder angebrachte und/oder ins Material der Lichtscheibe (9) integrierte Lichtstreustruktur, insbesondere durch wenigstens eine prismatische Struktur, gebildet ist, mit der Licht seitlich in zumindest einen Teilbereich des hinteren Überdeckungsrandbereiches (16) ablenkbar ist, von welchem ausgehend das Licht in Richtung zum Kennzeichenschild (2) hin abstrahlbar ist.

10. Beleuchtungseinrichtung nach einem der vorhergehenden Ansprüche, **dadurch gekennzeichnet, dass** das wenigstens eine lichtleitende und/oder lichtlenkende Element (15) das Licht in den gesamten hinteren Überdeckungsrandbereich (16) einleitet oder dass das wenigstens eine lichtleitende und/oder lichtlenkende Element (15) das Licht nur in einen definierten Teilbereich des hinteren Überdeckungsrandbereiches (16), insbesondere wenigstens in einen in Fahrzeuglängsrichtung gesehen hintersten Bereich (31; 40, 41, 42, 43) jedes Abstrahlbereichs (35, 36) des hinteren Überdeckungsrandbereiches (16), einleitet.

11. Beleuchtungseinrichtung nach einem der vorhergehenden Ansprüche, **dadurch gekennzeichnet, dass** dem hinteren Überdeckungsrandbereich (16) und/oder wenigstens dem in Fahrzeuglängsrichtung gesehen hintersten Bereich (31; 40, 41, 42, 43) der jeweiligen Abstrahlbereiche (35, 36) des hinteren Überdeckungsrandbereiches (16) wenigstens ein lichtleitendes und/oder lichtlenkendes Element (30) zugeordnet ist, mittels dem das eingeleitete Licht, insbesondere gerichtet und/oder als diffuses Licht, zum Kennzeichenschild (2) hin abstrahlbar ist.

12. Beleuchtungseinrichtung nach einem der vorhergehenden Ansprüche, **dadurch gekennzeichnet, dass** der Winkel (17) zwischen einer Verbindungsgeraden (18) von jedem in Fahrtrichtung hintersten Bereich (31; 40, 41, 42, 43) eines Abstrahlbereichs (35, 36) des lichtabstrahlenden, hinteren Überdeckungsrandbereiches (16) zur Unterkante (20) des Kennzeichenschildes (2) und einer Sichtfläche (21) des Kennzeichenschildes (2) wenigstens 8°, vorzugsweise genau 8°, beträgt.

13. Beleuchtungseinrichtung nach einem der vorhergehenden Ansprüche, **dadurch gekennzeichnet, dass** der hintere Überdeckungsrandbereich (16) oder wenigstens der in Fahrzeuglängsrichtung gesehen hinterste Bereich (31; 40, 41, 42, 43) eines jeden Abstrahlbereichs (35, 36) des hinteren Überdeckungsrandbereiches (16) und/oder die wenigstens eine lichtleitende und/oder lichtlenkende Struktur (30) Licht von einer in Fahrtrichtung hinteren bzw. hintersten Kante (31) des hinteren Überdeckungsrandbereiches (16) nach unten zum Kennzeichenschild (2) hin abstrahlt, insbesondere die hintere bzw. hinterste Kante (31) den Bezugspunkt für die Bestimmung des Lichteinfallswinkels (17) bildet.

14. Beleuchtungseinrichtung nach einem der vorhergehenden Ansprüche, **dadurch gekennzeichnet, dass** die Beleuchtungseinrichtung (1) Bestandteil einer Fahrzeugklappe, insbesondere einer Heckklappe oder einer Kofferraumklappe eines Fahrzeugs, oder Bestandteil eines Stoßfängers ist.

15. Beleuchtungseinrichtung nach einem der vorhergehenden Ansprüche, **dadurch gekennzeichnet, dass** die Lichtscheibe (9) als rahmenlose Lichtscheibe (9) ausgebildet ist, die unter Zwischenschaltung einer randseitig umlaufenden Dichtung (29) am Anlagerand (12) anliegt.

## Claims

1. Illumination device for a rear number plate for a vehicle, with a carrying wall (3) carrying the number plate (2) upon which a wall area abuts which forms an protrusion (4), which in an upwards direction with respect to the vehicle's vertical axis protrudes rearwards above the number plate (2) with an approximately horizontal surface, and with at least one recess (8) on the side of the protrusion which has a light source (13) situated above it, wherein the recess (8) is covered by a translucent panel (9) of a such a kind that the translucent panel (9) overlaps a supporting edge (12) surrounding the recess (8) with an overlap edge (11) from the bottom up, wherein a light with predetermined light intensity radiated from the light source (13) through the translucent panel (9) is radiated through the area within the overlap edge (11) to the number plate (2), wherein the translucent panel (9) has, extending over at least one partial area of the translucent panel (9), at least one area (19) of defined width, which has, defined in relation to the translucent area of the translucent panel (9), a lesser translucency, and which forms and/or at least segmentally separates from one another a plurality of radiation areas (35, 36) of the translucent panel (9) **characterised in that** the defined less translucent area (19) extends as a separation area starting from the rear in a longitudinal direction of the vehicle (x) overlap edge area (16) of the translucent panel (9) across at least one partial area of the translucent panel (9) and extends centrally between two adjoining radiation areas (35, 36) of the translucent panel (9) in transverse vehicle direction, and that the translucent panel (9) has at least one light-conducting and/or light-guiding element (15, 30) which directs light also into at least one partial area of a rear, in a longitudinal direction of the vehicle, overlap edge area (16) of the overlap edge (11), and from there radiates it with a predetermined light intensity to the number plate (2).

2. Illumination device according to claim 1, **characterised in that** the defined less translucent area (19) extends as a separation area starting from the rear overlap edge area (16) of the translucent panel (9) essentially in a straight line in the manner of a separating strip across the entire width of the translucent panel (9).

3. Illumination device according to one of the preceding claims, **characterised in that** the defined less translucent area (19) has a width of at least 15 mm and/or that the defined less translucent area is a substantially less translucent or an in a defined manner less translucent separation area.

4. Illumination device according to one of the preceding claims, **characterised in that** at least the rear overlap edge area (16) of the preferably rectangularly-shaped translucent panel (9) runs substantially in a straight line and/or substantially parallel to a rear, in a longitudinal direction of the vehicle, overlap rim (6) of the protrusion (4).

5. Illumination device according to one of the preceding claims, **characterised in that** at least the rear overlap edge area (16) of the translucent panel (9), preferably the entire, in particular rectangularly-shaped translucent panel (9), in a mounted state is tilted at a defined angle, in particular at an angle of 1° to 10° with relation to the central longitudinal axis (39) of the translucent panel (9), against the longitudinal axis of the vehicle (x) and herewith each of the radiation areas (35, 36) respectively has an area (40, 41, 42, 43) which is rearmost in respect to the longitudinal direction of the vehicle (x), into which light can be directed and from which light with a predetermined light intensity can be radiated to the number plate (2).

6. Illumination device according to claim 5, **characterised in that** the translucent panel (9) is rectangularly-shaped and has a central less translucent area (19) which starts from the rear overlap edge area (16) of the translucent panel (9) and extends in an approximately straight line across the width of the translucent panel (9), and which forms two rectangularly-shaped radiation areas (35, 36) which are separate from each other and adjoining with respect to a transverse direction of the vehicle, wherein in each case the rearmost corner viewed in a longitudinal vehicle direction (x) of each of the two rectangularly-shaped radiation areas forms an area (40, 41, 42, 43) or projection which is rearmost in a longitudinal direction of the vehicle (x), into which light can be directed and from which light with a predetermined light intensity can be radiated to the number plate (2).

7. Illumination device according to one of the preceding claims, **characterised in that** at each radiation area (35, 36) of the translucent panel (9) at the rear overlap edge area (16) at least one protrusion (32) is formed from this, preferably nose and/or finger-like, jutting to the rear according to direction of travel, into which light can be directed and from which light with a predetermined light intensity can be radiated to the number plate (2), wherein it is preferably provided that the defined less translucent area (19) in the form of a separating strip extends across the entire width of the translucent panel (9) and/or extends centrally between two radiation areas (35, 36) of the translucent panel (9) which are assigned to their respective protrusions (32) and which are adjoining.

8. Illumination device according to one of the preceding claims, **characterised in that** the defined less translucent area (19) is formed by a means mounted onto the translucent panel (9) and/or into the translucent panel (9), in particular by a layer and/or film which can be stuck on and/or sprayed on from above and/or sprayed on from the side and/or by a paint and/or by a component of a transparent panel (9) in the form of a multiple-component plastic screen.

9. Illumination device according to one of the preceding claims, **characterised in that** the at least one light-conducting and/or light-guiding element (15) is formed by at least one light distributing structure formed on at least one surface of the translucent panel (9) and/or mounted and/or integrated into the material of the translucent panel (9), in particular by at least one prismatic structure, with which light can be diverted laterally into at least one partial area of the rear overlap edge area (16), starting from which the light can be radiated in the direction of the number plate (2).

10. Illumination device according to one of the preceding claims, **characterised in that** the at least one light-conducting and/or light-guiding element (15) conducts the light into the entire rear overlap edge area (16) or that the at least one light-conducting and/or light-guiding element (15) conducts the light only into one defined partial area of the rear overlap edge area (16), in particular at least into one rearmost, viewed in a longitudinal direction of the vehicle, area (31; 40, 41, 42, 43) of each radiation area (35, 36) of the rear overlap edge area (16).

11. Illumination device according to one of the preceding claims, **characterised in that** at least one light-conducting and/or light-guiding element (30) is assigned to the rear overlap edge area (16) and/or at least to the rearmost, viewed in a longitudinal direction of the vehicle, area (31; 40, 41, 42, 43) of the respective radiation areas (35, 36) of the rear overlap edge area (16), with which the light which has been conducted in, in particular directed and/or as diffused light, can be radiated to the number plate (2).

12. Illumination device according to one of the preceding claims, **characterised in that** the angle (17) between a straight connecting line (18) from each in the direction of travel rearmost area (31; 40, 41, 42, 43) of a radiation area (35, 36) of the light radiating, rear overlap edge area (16) to the bottom rim (20) of the number plate (2), and a visible surface (21) of the number plate (2) is at least 8°, preferably precisely 8°.

13. Illumination device according to one of the preceding claims, **characterised in that** the rear overlap edge area (16) or at least the rearmost, viewed in a longitudinal direction of the vehicle, area (31; 40, 41, 42, 43) of each radiation area (35, 36) of the rear overlap edge area (16) and/or the at least one light-conducting and/or light-guiding structure (30) radiates light from a rear or rearmost, viewed in the direction of travel, rim (31) of the rear overlap edge area (16) down to the number plate (2), in particular that the rear or rearmost rim (31) forms the reference point for determining the angle (17) at which the light falls.

14. Illumination device according to one of the preceding claims, **characterised in that** the illumination device (1) is part of a vehicle lid, in particular of a hatch lid or of a luggage compartment lid of a vehicle, or part of a bumper.

15. Illumination device according to one of the preceding claims, **characterised in that** the translucent panel (9) is in the form of a borderless translucent panel (9) which abuts the supporting edge (12) with the interposition of a seal (29) which runs around the edge.

## Revendications

1. Dispositif d'éclairage pour une plaque d'immatriculation arrière d'un véhicule automobile, comportant une paroi de support (3) portant la plaque d'immatriculation (2), à laquelle paroi se raccorde une zone de paroi formant une saillie (4), qui s'écarte vers l'arrière par une surface plus ou moins horizontale dans la direction de l'axe vertical du véhicule au-dessus de la plaque d'immatriculation (2), ainsi qu'au moins une section côté saillie (8) avec une source de lumière (13) au-dessus, dans lequel la section (8) est recouverte par un disque lumineux transparent (9) en sorte que le disque lumineux (9) recouvre par un bord de recouvrement (11) par le bas un bord d'appui (12) entourant la section (8), dans lequel une lumière irradiée par la source de lumière (13) à travers le disque lumineux (9) et qui présente une luminance prédéterminée est irradiée par la surface à l'intérieur du bord de recouvrement (11) vers la plaque d'immatriculation (2), dans lequel le disque lumineux (9) présente au moins une zone (19) de largeur définie s'étendant sur au moins une zone partielle du disque lumineux (9), qui présente une transparence à la lumière plus faible de manière définie vis-à-vis de la zone transparente du disque lumineux (9) et forme plusieurs zones de rayonnement (35, 36) du disque lumineux (9) et/ou les sépare l'un de l'autre au moins par zones, **caractérisé en ce que** la zone de manière définie plus opaque (19) s'étend comme zone de séparation émanant de la zone de bord de recouvrement arrière (16) du disque lumineux (9) dans la direction longitudinale (x) du véhicule sur au moins une zone partielle du disque lumineux (9) et s'étend au centre entre deux zones de rayonnement (35, 36) du disque lumineux (9) situées l'une à côté de l'autre dans la direction transversale du véhicule, et le disque lumineux (9) présenté au moins un élément conducteur de lumière et/ou directeur de lumière (15, 30), qui conduit la lumière également dans au moins une zone partielle d'une zone (16) du bord de recouvrement (11) arrière dans la direction longitudinale du véhicule et irradie la lumière de ce point à la plaque d'immatriculation (2) avec une luminance prédéterminée.

2. Dispositif d'éclairage selon la revendication 1, **caractérisé en ce que** la zone de manière définie plus opaque (19) s'étend comme zone de séparation émanant de la zone de bord de recouvrement arrière (16) du disque lumineux (9) sensiblement en ligne droite à la manière d'un barrette de séparation sur toute la largeur du disque lumineux (9).

3. Dispositif d'éclairage selon l'une quelconque des revendications précédentes, **caractérisé en ce que** la zone de manière définie plus opaque (19) présente une largeur d'au moins 15 mm et/ou la zone de manière définie plus opaque est une zone de séparation sensiblement plus opaque ou plus opaque de manière définie

4. Dispositif d'éclairage selon l'une quelconque des revendications précédentes, **caractérisé en ce qu'**au moins la zone de bord de recouvrement arrière (16) du disque lumineux (9) conformé de préférence en rectangle s'étend sensiblement en ligne droite et/ou s'étend sensiblement parallèlement à une arête de transition arrière (6) de la saillie (4) dans la direction longitudinale du véhicule.

5. Dispositif d'éclairage selon l'une quelconque des revendications précédentes, **caractérisé en ce qu'**au moins la zone de bord de recouvrement arrière (16) du disque lumineux (9), de préférence la totalité du disque lumineux (9) conformé en particulier en rectangle est incliné(e) à l'état monté sous un angle défini, en particulier sous un angle de 1° à 10° par rapport à l'axe longitudinal central (39) du disque lumineux (9) à l'encontre de l'axe longitudinal (x) du véhicule et chacune des zones de rayonnement (35, 36) présentent donc respectivement une zone (40, 41, 42, 43) située le plus en arrière dans la direction longitudinale (x) du véhicule, dans laquelle de la lumière peut être introduite et de laquelle peut être irradiée de la lumière de luminance prédéterminée vers la plaque d'immatriculation (2).

6. Dispositif d'éclairage selon la revendication 5, **caractérisé en ce que** le disque lumineux (9) est conformé en rectangle et présente une zone centrale plus opaque (19) émanant de la zone de bord de recouvrement arrière (16) du disque lumineux (9) et s'étendant plus ou moins en ligne droite sur la largeur du disque lumineux (9), zone par laquelle sont formées deux zones de rayonnement de forme rectangulaire (35, 36) séparées l'une de l'autre et disposées l'une à côté de l'autre dans la direction transversale du véhicule, dans lequel, respectivement, le bord le plus en arrière de chacune des deux zones de rayonnement de forme rectangulaire observé dans la direction longitudinale (x) du véhicule forme une zone (40, 41, 42, 43) ou une saillie située le plus en arrière dans la direction longitudinale (x) du véhicule, dans laquelle de la lumière peut être introduite et par laquelle de la lumière de luminance prédéterminée peut être irradiée vers la plaque d'immatriculation (2).

7. Dispositif d'éclairage selon l'une quelconque des revendications précédentes, **caractérisé en ce que,** dans chaque zone de rayonnement (35, 36) du disque lumineux (9), dans la zone de bord de recouvrement arrière (16), il est formé au moins une saillie (32) dépassant vers l'arrière de celle-ci, de préférence en forme de taquet et/ou de doigt, dans la direction de marche, dans laquelle saillie de la lumière peut être introduite et par laquelle peut être irradiée de la lumière à luminance prédéterminée vers la plaque d'immatriculation (2), dans lequel il est prévu de préférence que la zone de manière définie plus opaque (19) s'étende à la manière d'une barrette de séparation sur toute la largeur du disque lumineux (9) et/ou au centre entre deux zones de rayonnement (35, 36) du disque lumineux (9) affectées aux saillies (32) respectives et disposées l'une à côté de l'autre.

8. Dispositif d'éclairage selon l'une quelconque des revendications précédentes, **caractérisé en ce que** la zone plus opaque de manière définie (19) est formée par un moyen appliqué sur le disque lumineux (9) et/ou inséré dans le disque lumineux (9), en particulier formée par une couche collable et/ou applicable au pistolet et/ou pulvérisable et/ou un film et/ou par un vernissage et/ou par un composant d'un disque lumineux (9) conformé en disque de matière plastique à multiples composants.

9. Dispositif d'éclairage selon l'une quelconque des revendications précédentes, **caractérisé en ce que** le au moins un élément conducteur de lumière et/ou directeur de lumière (15) est formé par au moins une structure de dispersion de lumière formée et/ou appliquée sur au moins une surface du disque lumineux (9) et/ou intégrée au matériau du disque lumineux (9), en particulier par au moins une structure prismatique, avec laquelle de la lumière peut être guidée latéralement dans au moins une zone partielle de la zone de bord de recouvrement arrière (16), à partir de laquelle la lumière peut être irradiée dans la direction de la plaque d'immatriculation (2).

10. Dispositif d'éclairage selon l'une quelconque des revendications précédentes, **caractérisé en ce que** le au moins un élément conducteur de lumière et/ou directeur de lumière (15) introduit la lumière dans la zone de bord de recouvrement arrière (16) total ou le au moins un élément conducteur de lumière et/ou directeur de lumière (15) introduit la lumière uniquement dans une zone partielle définie de la zone de bord de recouvrement arrière (16), en particulier au moins dans une zone (31; 40, 41, 42, 43) la plus en arrière de chaque zone de rayonnement (35, 36) de la zone de bord de recouvrement arrière (16) en observant dans la direction longitudinale du véhicule.

11. Dispositif d'éclairage selon l'une quelconque des revendications précédentes, **caractérisé en ce qu'**il est affecté à la zone de bord de recouvrement arrière (16) et/ou au moins à la zone (31; 40, 41, 42, 43) la plus en arrière des zones de rayonnement respectives (35, 36) de la zone de bord de recouvrement (16) arrière en observant dans la direction longitudinale du véhicule au moins un élément conducteur de lumière et/ou directeur de lumière (30), au moyen duquel la lumière introduite peut être en particulier dirigée et/ou irradiée comme lumière diffuse vers la plaque d'immatriculation (2).

12. Dispositif d'éclairage selon l'une quelconque des revendications précédentes, **caractérisé en ce que** l'angle (17) entre une ligne de liaison (18) de chaque zone (31; 40, 41, 42, 43) la plus en arrière dans la direction de marche d'une zone de rayonnement (35, 36) de la zone de bord de recouvrement arrière (16) irradiant de la lumière vers l'arête inférieure (20) de la plaque d'immatriculation (2) et une surface de vision (21) de la plaque d'immatriculation (2) atteint au moins 8°, de préférence exactement 8°.

13. Dispositif d'éclairage selon l'une quelconque des revendications précédentes, **caractérisé en ce que** la zone de bord de recouvrement arrière (16) ou au moins la zone (31; 40, 41, 42, 43) la plus en arrière observée dans la direction longitudinale du véhicule d'une zone de rayonnement individuelle (35, 36) de la zone de bord de recouvrement arrière (16) et/ou la au moins une structure conductrice de lumière et/ou directrice de lumière (30) irradie de la lumière d'une arête (31) arrière ou la plus en arrière dans la direction de marche de la zone de bord de recouvrement arrière (16) vers le bas en direction de la plaque d'immatriculation (2), en particulier l'arête arrière ou la plus en arrière (31) forme le point de référence pour la détermination de l'angle incident (17) de la lumière.

14. Dispositif d'éclairage selon l'une quelconque des revendications précédentes, **caractérisé en ce que** le dispositif d'éclairage (1) fait partie d'un abattant de véhicule, en particulier d'un abattant arrière ou d'un abattant de coffre d'un véhicule ou fait partie d'un pare-chocs.

15. Dispositif d'éclairage selon l'une quelconque des revendications précédentes, **caractérisé en ce que** le disque lumineux (9) se présente sous la forme d'un disque lumineux sans châssis (9), qui s'applique sur un bord d'appui (12) par l'intermédiaire d'un joint étanche circonférentiel côté bord (29).
